# EUROPEAN PATENT SPECIFICATION

(11) **EP 4 057 974 B1**
(45) Date of publication and mention of the grant of the patent: **15.04.2026**
(21) Application number: 20820330.7
(22) Date of filing: 13.11.2020
(51) Int. Cl.: A61G 7/018, A61G 13/06, A61G 15/02

(54) **LIFTING COLUMN**
HEBESÄULE
COLONNE ÉLÉVATRICE

(30) Priority: 13.11.2019 DK PA201901331
(43) Date of publication of application: 21.09.2022
(73) Proprietor: LINAK A/S, 6430 Nordborg (DK)
(72) Inventor: BENDIXEN, Martin, 8400 Sønderborg (DK)
(74) Representative: Høyer, Michael
(86) International application number: PCT/DK2020/000327
(87) International publication number: WO 2021/093922

(56) References cited:
- EP-A1- 0 488 990
- WO-A2-2014/154687
- DE-A1- 10 018 742
- DE-A1- 3 239 077

## Description

The present invention relates to a lifting column comprising at least two telescopically arranged members and a drive unit located in the hollow hereof. The drive unit comprises an electric motor, a transmission and a spindle unit with a number of spindles and at least one spindle nut. The electric motor drives the spindle unit via the transmission. The spindle nut is secured against rotation, thus enabling a longitudinal displacement of the telescopic members such that they are extended out of or retracted into each other depending on the direction of rotation of the electric motor. An example of such a known type of lifting column can be found in DE 100 18 742 A1.

Such columns are used in various applications such as hospital beds, treatment tables and chairs, dental chairs, scanners, x-ray apparatus, special seats e.g. officer's seats. There are great demands for strength and rigidity in these types of columns, thus making the columns expensive to manufacture.

The lifting columns are typically exposed to large forces and torques. Therefore, the lifting columns need to be voluminous in order to accommodate the drive unit, which ideally is arranged in such a manner that the line of force of the drive unit converges with the longitudinal axis through the centre of the cross section of the telescopically arranged members. This is to avoid integrated torques in the lifting column. Spindle units with a number of spindles have a weak point located where the spindles engage each other; here the spindles tend to deflect and be deformed and can even damage the construction or, in worst case, break. For that reason, drive units with a combination of spindles and chains are used. To reduce the size of the lifting columns, it is also known to place parts of the drive unit outside the members of the lifting column. A lifting column having internal support member for supporting the spindle is known from EP 0 488 990 A.

DE 298 00 015 U1 to Joh. Stiegelmeyer and WO 00/56259 A1 to Völker Möbelproduktionsgesellschaft concerning a hospital bed, disclose lifting columns having a spindle unit driven by a toothed belt drive where the motor is located outside the column. A lifting column driven by a combined spindle and chain drive, where the motor is also located outside the lifting column, is known from EP 0 982 018 B1. The design of these lifting columns is highly influenced by the drive being built onto the members. From WO2009/033486 A1 to Linak, it is known to have a lifting column with a chain drive build into the column.

From US 10,400,945 B2 to Panzer et al., SKF, it is known to have a lifting column with two members and one spindle, where the drive unit is located within the lifting column. The spindle is located offset the longitudinal axis through the centre of the cross section of the members of the lifting column, for which reason the lifting column has an integrated torque. Furthermore, the lifting column has either a small stroke or a long built-in dimension, as it only has one spindle.

The object of the invention is to improve the type of lifting columns having a drive unit with spindles as stated in the preamble.

This is achieved according to the invention as defined in claim 1 in that the lifting column comprises at least one supporting element connected to a spindle, where the supporting element is configured to abut onto the inner side of the telescopic member. Thus, a strong construction is achieved as the supporting element prevents the spindle unit from deflecting, as a horizontal force resulting from a high axial load or torque will be transferred to the members via the supporting element.

In an embodiment of the lifting column, a free end of the spindle is rotatably connected to the supporting element. In an embodiment of the lifting column, the spindle is a hollow spindle.

In an embodiment of the lifting column, the supporting element comprises a through-going hole for a spindle to pass through.

In an embodiment of the lifting column, the hollow spindle is rotatably connected to the supporting element such that it aligns with the through-going hole of the supporting element.

In an embodiment of the lifting column, the supporting element comprises sliders on the surfaces abutting the inner side of the telescopic member.

In an embodiment of the lifting column, the supporting element is a plate. It is thereby possible to have a large number of contact points between the supporting element and an inner side of a member of the lifting column, which reduces the force applied to each point of contact. However, the supporting element could have different shapes as long as it abuts onto an inner side of a telescopic member of the lifting column. It could e.g. be a cross where the ends of the arms abut onto an inner side of a member of the lifting column. The ends of the arms could also be guided in longitudinal tracks in the walls of the members or in the corners of members with a quadrangular cross section.

In an embodiment, the lifting column comprises two telescopically arranged members, and a spindle unit having a drive tube, two spindles, and one spindle nut.

In an embodiment of the lifting column, the longitudinal axis of the spindle unit aligns with the centre axis of the cross section of the telescopic members.

In an embodiment of the lifting column, the longitudinal axis of the spindle unit is offset relative to the centre axis of the cross section of the telescopic members.

Further features of the invention will be described more fully in the following description of an embodiment of the invention with reference to the accompanying drawings, in which:
Fig. 1 shows a longitudinal section of a lifting column in an extended position,
Fig. 2 shows a cross section of the lifting column of fig. 1,
Fig. 3 shows a perspective view of the supporting element,
Fig. 4 shows a schematic view of a scanner suspended from the ceiling, and
Fig. 5 shows a schematic view of a hospital bed.

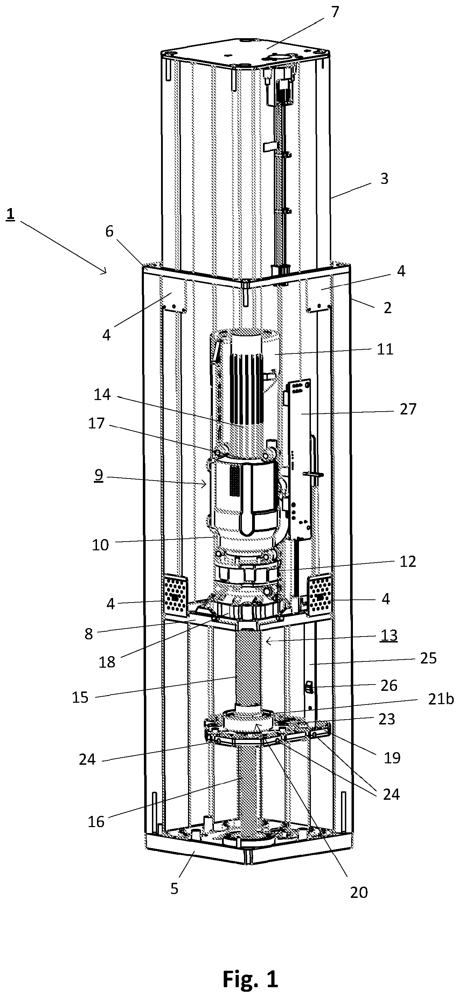

As it appears from Fig. 1, the lifting column 1 comprises an outer member 2 and an inner member 3, which can extend telescopically out of the outer member **2.** The members 2,3 are extruded aluminium tubes having a rectangular cross section, which functions as a securing against rotation of the two members 2,3 relative to each other. Sliders 4 are located between the members 2,3. The outer member 2 is closed at the bottom by means of a base plate **5.** The base plate 5 can be mounted directly onto the end of the outer member 2 with screws 23 engaging screw channels in each corner of the rectangular outer member 2. To the upper end of the outer member 2, a top frame 6 is secured, which closes or at least covers most of the gap between the outer member 2 and the inner member 3. A top plate 7 is mounted to the upper end of the inner member 3, while the lower end is furnished with a bottom plate 8.

A drive unit 9 is mounted to the bottom plate 8. The drive unit 9 comprises a chassis 10, a reversible electric motor 11, a transmission 12 in the form of a gear train, and a spindle unit 13. The spindle unit 13 comprises a drive tube 14 with a female spline inside the tube. A hollow spindle 15 is displaceably located in the drive tube 14 and comprises a collar at its upper end. The collar comprises a male spline for engagement with the female spline on the inner side of drive tube 14. The spindle unit 13 further comprises a threaded solid spindle 16 displaceably arranged inside the hollow spindle 15. The threaded solid spindle 16 is directly or indirectly in engagement with thread inside the hollow spindle 15. This thread could be located on the inner wall of the hollow spindle or be a threaded collar fixed to the end of the hollow spindle. The lower end of the solid spindle 16 is fixed to the base plate 5 of the outer member 2 and can thus not rotate. The drive tube 14 is with an end rotatably arranged in a cylindrical channel 17 in the chassis 10 of the drive unit 9. The drive tube 14 is driven by the electric motor 11 through the transmission 12. The transmission 12 is incorporated in the chassis 10, and the reversible electric motor 11 is mounted on the chassis 10, such that the output shaft of the motor 11 is in engagement with the transmission 12. The output of the transmission 12 is a gear wheel directly or indirectly engaging a male spline on the outer side of the drive tube 14.

A spindle nut 18 engaging the outer thread of the hollow spindle 15 is arranged in the chassis 10. The spindle nut 18 is secured against rotation inside the chassis 10, which is mounted to the bottom plate 8 of the inner member 3. When the electric motor 11 is operated, it rotates the drive tube 14 via the transmission 12, which again rotates the hollow spindle 15. Since the spindle nut 18 is secured against rotation in the chassis 10, the hollow spindle 15 will be displaced back and forth on the drive tube 14 depending on the direction of rotation of the electric motor 11. As the hollow spindle 15 engages the solid spindle 16, the hollow spindle 15 would synchronously move back and forth on the solid spindle 16. With the drive unit 9 and the chassis 10 mounted on the bottom plate 8 of the inner member 3, this would be expelled out of the outer member 2 in a first direction of rotation of the electric motor 11. When the direction of rotation of the motor 11 is reversed, i.e. in a second direction of rotation, the inner member 3 is retracted into the outer member 2. Depending on configuration, the drive unit 9 can, in general, be connected directly or indirectly to the telescopic member 2,3 in many ways, to enable the longitudinal displacement of the telescopic members (2,3).

The lower end of the hollow spindle 15 is rotatably connected to a supporting element 19 in the shape of a plate. The lower end of the hollow spindle 15 thus comprises a ball bearing 20 incorporated in a recess of a ring-shaped bracket 21, which is mounted to the supporting element 19. In the present embodiment, the bracket 21 is in two halves 21a,21b. The bracket 21 is located in connection with a hole 22 in a corner of the supporting element 19, aligning the through-going holes in the bracket 21 and the ball bearing 20. This allows the solid spindle 16 to enter the inside of the hollow spindle 15. The bracket 21 is mounted to the supporting element 19 by means of screws 23.

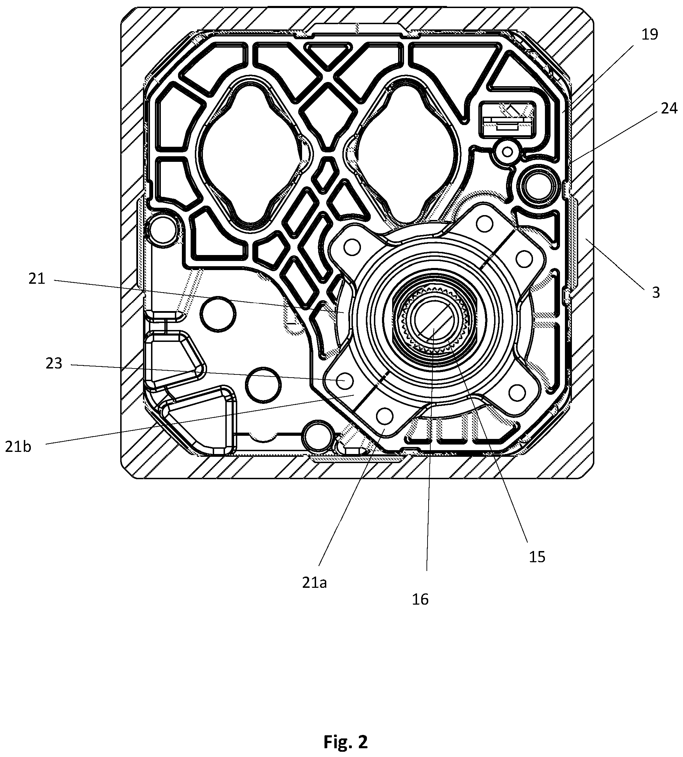

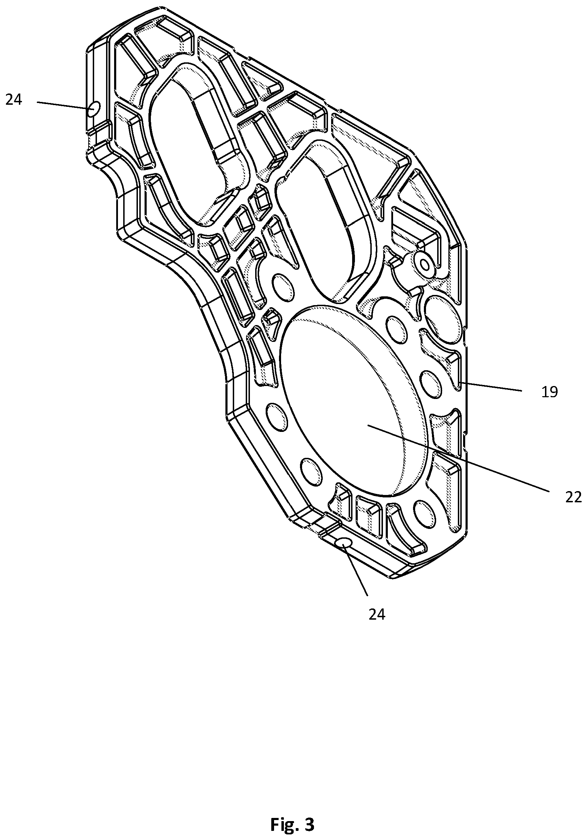

The supporting element 19 comprises slides 24 on the sides for engagement with the inner walls of the outer member 2. The slides 24 are shaped as flat arched studs. As it can be seen from Fig. 2 and especially Fig. 3, the supporting element 19 is for all intents and purposes quadrangular with one cut corner. The supporting element 19 further comprises holes, e.g. for guiding cables inside the lifting column 1.

An elongated printed circuit board 27 is attached to the bottom plate 8 of the inner member 3. The printed circuit board 27 is equipped with end-stop switches or signal switches (not shown). The switches are activated by protrusions 26 (only one is shown) on an activation pin 25, which is connected to the supporting element 19 and extending along an axis parallel to the longitudinal axis of the members 2,3 through a hole in the bottom plate **8.** The activation pin 25 has two protrusions 26 placed at a distance which corresponds to the desired stroke length of the lifting column 1. When a switch is activated, the adjustment of the lifting column 1 is interrupted. Another printed circuit board for control of the lifting column 1 is arranged on the chassis 10 of the drive unit 9.

Since the supporting element 19 is connected to the lower end of the hollow spindle 15, it will be moved upwards when the inner member 3 is expelled out of the outer member 2. As the supporting element 19 abuts the inner side of the outer member 2, the hollow spindle 15 cannot flex relative to the longitudinal axis of the members 2,3. Hereby, the hollow 15 and solid spindle 16 can be kept in their rectilinear position. As a result, the lifting column 1 can withstand high forces and torques.

The present embodiment is an example of a lifting column 1 with a relatively small cross section and a voluminous drive unit 9 to obtain a high lifting force. For that reason, the spindle unit 13 is placed in a corner of the lifting column 1, cf. the cross section of the lifting column 1 in Fig. 2. However, ideally the spindle unit 13 is placed in the centre of the cross section of the lifting column 1.

By placing the spindle unit 13 offset the centre axis, the resulting loads exert a torque on the lifting column. Hereby, the cross section of the lifting column 1 could be reduced and still achieve a high load, as the spindle unit 13 is kept in place by the supporting element 19.

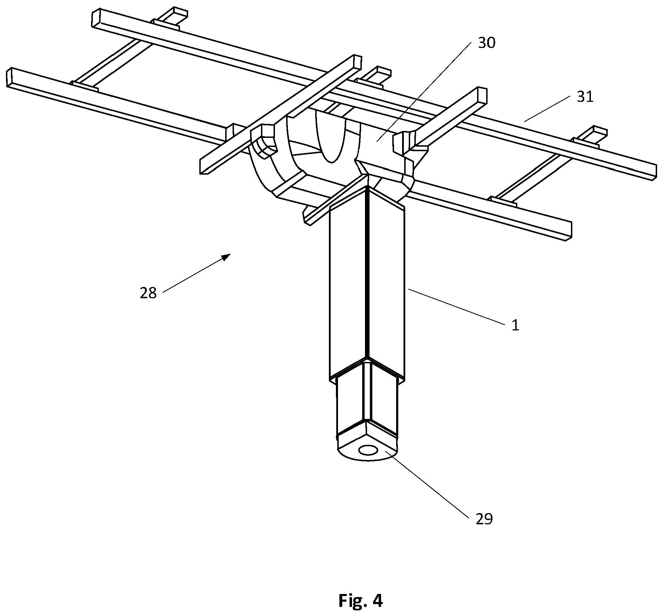

Fig. 4 shows a schematic view of a ceiling traveling X-ray apparatus 28 suspended from a structure of rails 31 in the ceiling. The X-ray camera 29 is mounted at a free end of a lifting column 1, which with the other end is mounted in the carriage 30 so the X-ray camera 29 could be height-adjusted. Further, the X-ray camera 29 could be rotated to adapt its position to the object which should be examined. Thus, the lifting column 1 is exposed to both a vertical load as well as a horizontal load and a torque when bringing the camera 29 into the position. The carriage 30 is moved by pushing or pulling it using a handle on the X-ray camera 29 resulting in a horizontal force and a torque on the lifting column 1.

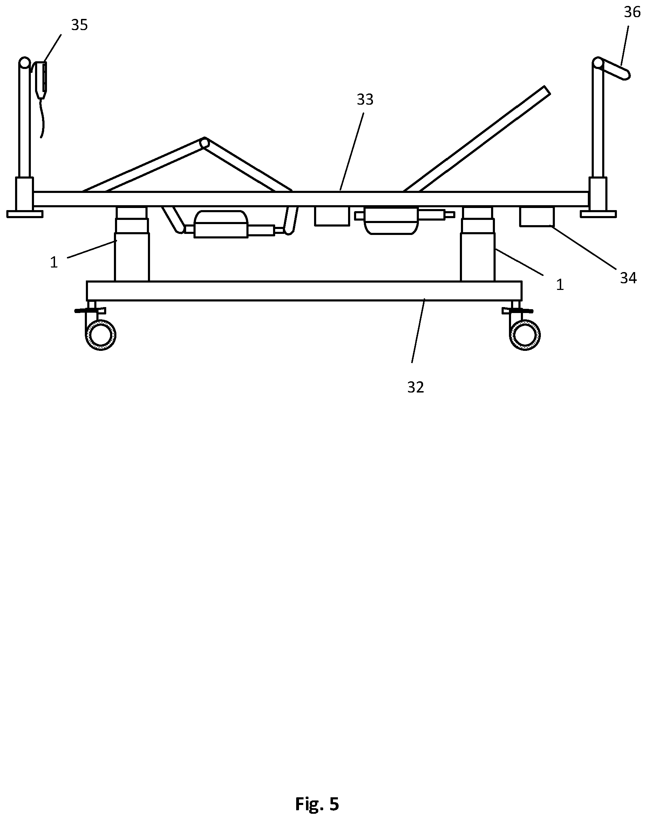

Fig. 5 shows a schematic view of a bed with a lower frame 32 equipped with drive wheels and an upper frame 33. The upper frame 33 is connected to the lower frame 32 by means of a telescopic lifting column 1 located at each end of the bed in its longitudinal centre axis for raising and lowering the upper frame 33. The lifting columns 1 are exposed to high forces and torques, e.g. when a person or two persons are sitting on one side of the bed, or if the bed could assume a Trendelenburg position i.e. where the upper frame 33 is tilted about a transverse axis. The lifting columns 1 are connected to a control box 34, comprising a power supply and a control unit 35,36.

In the present embodiment, the lifting columns comprise two members and a spindle unit with a drive tube and two spindles. However, the lifting column could comprise more members, and the spindle unit could likewise consist of more spindles. Further, depending on the number of spindles, more supporting elements could be utilized. As an example, the lifting column could have three members, the spindle unit could have four spindles and there could be two supporting elements. The present embodiment shows a lifting column with members having a rectangular cross section; however, the cross section could be circular or hexagonal or any other shape. The shape of the supporting element can but does not necessarily have to be adapted to the shape of the cross section of the members.

In the description of the lifting column, terms like top, bottom have been used to describe the invention as depicted in the figures. It is, however, evident that the lifting column could be used as depicted in figure 4, which would e.g. make the bottom plate a top plate. Thus, the terms used refers to the relative position or relation of the structural features.

## Claims

1. Lifting column comprising at least two telescopically arranged members (2,3) and a drive unit (9) located in the hollow hereof, where the drive unit (9) comprises an electric motor (11), a transmission (12) and a spindle unit (13) with a number of spindles (15,16) and at least one spindle nut (18), where the electric motor (11) drives the spindle unit (13) via the transmission (12), and where the drive unit (9) is connected to the at least two telescopically arranged members (2,3) , which enables a longitudinal displacement of the telescopic members (2,3) such that they are extended out of or retracted into each other depending on the direction of rotation of the electric motor (11), **characterized in that** the lifting column comprises at least one supporting element (19) attached to a spindle (15,16), and where the supporting element (19) is arranged inside a telescopic member (2,3), and where the supporting element (19) is configured to abut the inner side of the telescopic member (2,3).

2. Lifting column according to claim 1, **character ized** in that an end of the spindle (15,16) is rotatably connected to the supporting element (19).

3. Lifting column according to claim 2, **character** i z e d in that the spindle is a hollow spindle (15).

4. Lifting column according to claim 1, **character** ized in that the supporting element (19) comprises a through-going hole (22) for a spindle (15,16) to pass through.

5. Lifting column according to one or more of claims 3 to 4, **characterize**d in that the hollow spindle (15) is rotatably connected to the supporting element (19) such that it aligns with the through-going hole (22) of the supporting element (19).

6. Lifting column according to one or more of claims 1 to 5, **characterized in that** the supporting element (19) comprises sliders (24) on the surfaces abutting the inner side of the telescopic member (2,3).

7. Lifting column according to one or more of claims 1 to 5, **characterized in that** the supporting element (19) is a plate.

8. Lifting column according to one or more of claims 1 to 7, c**haracterized** in that it comprises two telescopically arranged members (2,3), and the spindle unit (13) comprises a drive tube (14) and two spindles (15,16) and one spindle nut (18).

9. Lifting column according to one or more of claims 1 to 8, **characterized in that** the longitudinal axis of the spindle unit (13) aligns with the centre axis of the cross section of the telescopic members (2,3).

10. Lifting column according to one or more of claims 1 to 8, **c h a r a c t e r i z e d** in that the longitudinal axis of the spindle unit (13) is offset relative to the centre axis of the cross section of the telescopic members (2,3).

## Patentansprüche

1. Hubsäule, umfassend mindestens zwei teleskopartig angeordnete Profile (2, 3) und eine Antriebseinheit (9), die in dem Hohlraum davon platziert ist, wobei die Antriebseinheit (9) einen Elektromotor (11), ein Getriebe (12) und eine Spindeleinheit (13) mit einer Anzahl von Spindeln (15, 16) und mindestens einer Spindelmutter (18) umfasst, wobei der Elektromotor (11) die Spindeleinheit (13) über das Getriebe (12) antreibt, und wobei die Antriebseinheit (9) mit den mindestens zwei teleskopartig angeordneten Profilen (2, 3) verbindet, was eine Längsverschiebung der Teleskopprofile (2, 3) ermöglicht, sodass sie abhängig von der Drehrichtung des Elektromotors (11) auseinander herausgezogen oder ineinander eingefahren werden, **dadurch gekennzeichnet, dass** die Hubsäule mindestens ein Trageelement (19) umfasst, das an einer Spindel (15, 16) angebracht ist, und wobei das Trageelement (19) im Inneren eines Teleskopbauteils (2, 3) angeordnet ist, und wobei das Trageelement (19) dazu konfiguriert ist, an der Innenseite des Teleskopbauteils (2, 3) anzuliegen.

2. Hubsäule nach Anspruch 1, **dadurch gekennzeichnet, dass** ein Ende der Spindel (15, 16) drehbar mit dem Trageelement (19) verbunden ist.

3. Hubsäule nach Anspruch 2, **dadurch gekennzeichnet, dass** die Spindel (15) eine hohle Spindel ist.

4. Hubsäule nach Anspruch 1, **dadurch gekennzeichnet, dass** das Trageelement (19) ein durchgehendes Loch (22) umfasst, damit eine Spindel (15, 16) hindurch verlaufen kann.

5. Hubsäule nach einem oder mehreren der Ansprüche 3 bis 4, **dadurch gekennzeichnet, dass** die hohle Spindel (15) drehbar mit dem Trageelement (19) verbunden ist, sodass sie mit dem durchgehenden Loch (22) des Trageelements (19) ausgerichtet ist.

6. Hubsäule nach einem oder mehreren der Ansprüche 1 bis 5, **dadurch gekennzeichnet, dass** das Trageelement (19) Schieber (24) auf den Oberflächen umfasst, die an der Innenseite des Teleskopbauteils (2, 3) anliegen.

7. Hubsäule nach einem oder mehreren der Ansprüche 1 bis 5, **dadurch gekennzeichnet, dass** das Trageelement (19) eine Platte ist.

8. Hubsäule nach einem oder mehreren der Ansprüche 1 bis 7, **dadurch gekennzeichnet, dass** sie zwei teleskopartig angeordnete Profile (2, 3) umfasst, und die Spindeleinheit (13) ein Antriebsrohr (14) und zwei Spindeln (15, 16) und eine Spindelmutter (18) umfasst.

9. Hubsäule nach einem oder mehreren der Ansprüche 1 bis 8, **dadurch gekennzeichnet, dass** die Längsachse der Spindeleinheit (13) mit der Mittelachse des Querschnitts der Teleskopprofile (2, 3) ausgerichtet ist.

10. Hubsäule nach einem oder mehreren der Ansprüche 1 bis 8, **dadurch gekennzeichnet, dass** die Längsachse der Spindeleinheit (13) relativ zu der Mittelachse des Querschnitts der Teleskopprofile (2, 3) versetzt ist.

## Revendications

1. Colonne élévatrice comprenant au moins deux éléments agencés de manière télescopique (2, 3) et une unité d'entraînement (9) logée dans le creux de celle-ci, où l'unité d'entraînement (9) comprend un moteur électrique (11), une transmission (12) et une unité de broches (13) avec un certain nombre de broches (15, 16) et au moins un écrou de broche (18), où le moteur électrique (11) entraîne l'unité de broches (13) via la transmission (12), et où l'unité d'entraînement (9) est reliée aux au moins deux éléments agencés de manière télescopique (2, 3), ce qui permet un déplacement longitudinal des éléments télescopiques (2, 3) de telle sorte qu'ils s'étendent ou se rétractent l'un dans l'autre en fonction du sens de rotation du moteur électrique (11), **caractérisé en ce que** la colonne élévatrice comprend au moins un élément de support (19) fixé à une broche (15, 16), et où l'élément de support (19) est agencé à l'intérieur d'un élément télescopique (2, 3), et où l'élément de support (19) est configuré pour venir en butée contre le côté interne de l'élément télescopique (2, 3).

2. Colonne élévatrice selon la revendication 1, **caractérisée en ce qu'**une extrémité de la broche (15, 16) est reliée de manière rotative à l'élément de support (19).

3. Colonne élévatrice selon la revendication 2, **caractérisée en ce que** la broche est une broche creuse (15).

4. Colonne élévatrice selon la revendication 1, **caractérisée en ce que** l'élément de support (19) comprend un trou traversant (22) pour le passage d'une broche (15, 16).

5. Colonne élévatrice selon une ou plusieurs des revendications 3 à 4, **caractérisée en ce que** la broche creuse (15) est reliée de manière rotative à l'élément de support (19) de sorte qu'elle s'aligne avec le trou traversant (22) de l'élément de support (19).

6. Colonne élévatrice selon une ou plusieurs des revendications 1 à 5, **caractérisée en ce que** l'élément de support (19) comprend des coulisseaux (24) sur les surfaces venant en butée contre le côté interne de l'élément télescopique (2, 3).

7. Colonne élévatrice selon une ou plusieurs des revendications 1 à 5, **caractérisée en ce que** l'élément de support (19) est une plaque.

8. Colonne élévatrice selon une ou plusieurs des revendications 1 à 7, **caractérisée en ce qu'**elle comprend deux éléments agencés de manière télescopique (2, 3), et l'unité de broches (13) comprend un tube d'entraînement (14) et deux broches (15, 16) et un écrou de broche (18).

9. Colonne élévatrice selon une ou plusieurs des revendications 1 à 8, **caractérisée en ce que** l'axe longitudinal de l'unité de broches (13) s'aligne avec l'axe central de la section transversale des éléments télescopiques (2, 3).

10. Colonne élévatrice selon une ou plusieurs des revendications 1 à 8, **caractérisée en ce que** l'axe longitudinal de l'unité de broches (13) est décalé par rapport à l'axe central de la section transversale des éléments télescopiques (2, 3).
